(19) **Europäisches Patentamt**

**European Patent Office**

**Office européen des brevets**

(11) **EP 1 546 243 B1**

(12) **EUROPEAN PATENT SPECIFICATION**

(45) Date of publication and mention
of the grant of the patent:
**02.11.2006 Bulletin 2006/44**

(51) Int Cl.:
***C08J 9/00*** (2006.01)

(21) Application number: **03797807.9**

(22) Date of filing: **09.07.2003**

(86) International application number:
**PCT/US2003/021434**

(87) International publication number:
**WO 2004/026948 (01.04.2004 Gazette 2004/14)**

(54) **POLYMERIC FOAM COMPOSITES THAT MEET FACTORY MATERIAL 4880 REQUIREMENTS**

POLYMERSCHAUMSTOFFVERBUNDE, DIE DIE ANFORDERUNGEN VON FACTORY MATERIAL 4880 ERFALLEN

COMPOSITES DE MOUSSE POLYMERIQUE SATISFAISANT LES EXIGENCES DE MATERIAU D'USINE 4880

(84) Designated Contracting States:
**AT BE BG CH CY CZ DE DK EE ES FI FR GB GR HU IE IT LI LU MC NL PT RO SE SI SK TR**

(30) Priority: **17.09.2002 US 411776 P**

(43) Date of publication of application:
**29.06.2005 Bulletin 2005/26**

(73) Proprietor: **DOW GLOBAL TECHNOLOGIES INC.**
**Midland, Michigan 48674 (US)**

(72) Inventors:
• **HOUT, Penne, J.**
**Tampa, FL 33625 (US)**

• **LONDRIGAN, Michael, E.**
**Clearwater, FL 33761 (US)**
• **RODRIGUEZ, Trina, M.**
**Tampa, FL 33615 (US)**

(74) Representative: **Raynor, John et al**
**Beck Greener**
**Fulwood House**
**12 Fulwood Place**
**London WC1V 6HR (GB)**

(56) References cited:
**EP-A- 0 832 735        GB-A- 895 967**
**US-A- 4 028 158**

**Description**

The present invention relates to polyurethane and polyisocyanurate foam composites that are sufficiently flame retardant to pass both wall and ceiling portions of the United Building Code (UBC) 26-3 Room Corner Burn Test (RCBT) and that meet Factory Mutual (FM) 4880 requirements.

Polymeric foam composites comprise a polymeric foam with opposing major surfaces and a facing material on at least one major surface. Polymeric foam composites are useful as thermal and acoustical insulation in building construction. Polymeric foam composites that meet requirements of FM4880 are particularly desirable because governing bodies such as the International Conference of Building Officials (ICBO) identify them as suitable for exposed applications. Exposed applications include walls and ceilings around a room where there are no barriers, such as drywall, between the room and foam composite.

To meet FM 4880 requirements a polymeric foam composite (PFC) needs to achieve both a Flame Spread Parameter of less than 0.39 in the Factory Mutual Small Scale Flammability Apparatus test and pass the UBC 26-3 RCBT. Passing the RCBT is especially difficult. The RCBT has two levels of evaluation, a wall portion and a ceiling portion, with the ceiling portion being the harder of the two to pass. Both the wall and ceiling portions of the RCBT are more difficult to pass than, for example, ASTM E-84 Class I testing. The RCBT tends to produce higher temperatures and has a more stringent smoke production requirement than the ASTM E-84 Class I test.

Currently, a PFC that passes both the wall and ceiling portions of the RCBT requires a foam with a residual blowing agent composition that contains mostly chlorofluorocarbon (CFC), hydrochlorofluorocarbons (HCFC), or a combination of both CFC and HCFC blowing agents. However, regulatory action in various countries around the world is restricting the use of CFC and HCFC blowing agents for preparing polymeric foam.

A PFC that successfully passes both the wall and ceiling portions of the RCBT and that contains a polymeric foam with a residual blowing agent composition that contains less than 50 weight percent (wt percent) CFC and HCFC blowing agents, based on total residual blowing agent composition weight, is desirable. More desirable is such a foam composition that is free of CFC or HCFC blowing agents. Still more desirable is such a foam composition that is free of halogenated blowing agents.

US-A-4 028 158 discloses a structural laminate produced by contacting a mat of glass fibres with a foam forming mixture

In one aspect, the present invention is a polymeric foam composite comprising a polymeric foam selected from polyurethane resin (PUR) and polyisocyanurate resin (PIR) foam that has opposing front and back surfaces, said foam comprising: (a) halogens at a concentration of at least 4 weight-percent (wt percent) based on foam weight, wherein at least 10 wt percent of the halogen concentration is from a highly-halogenated compound; (b) phosphorous at a concentration of at least 0.25 weight-percent based on foam weight; (c) a residual blowing agent composition containing less than 50 percent, based on residual blowing agent composition weight, of chlorofluorocarbon and hydrochlorofluorocarbon blowing agent(s); (d) flame-retarding fibers at an average concentration of at least one weight-percent, based on combined foam and fiber weight, within 0.125 inches (3.2 millimeters) of the foam's front surface; and (e) a facing sheet adhered to at least the front surface, said facing sheet having an exposed metal sheet; wherein said polymeric foam composite passes both the wall and ceiling portions of the United Building Code 26-3 Room Corner Burn Test and meets qualifications for Factory Mutual 4880 approval.

In a second aspect, the present invention is a process for preparing the polymeric foam composite of Claim 1 comprising the steps: (i) conveying a bottom facing sheet and a top facing sheet such that the top facing sheet is above and substantially planar to the bottom facing sheet; (ii) disposing a flame-retarding fiber component between the facing sheets; (iii) disposing a foamable mixture selected from PUR and PIR foamable mixtures between the top and bottom facing sheets; (iv) constricting the top and bottom facing sheets through a metering gap, achieving penetration of the foamable mixture into the fiber component; and (v) expanding the foamable mixture into a polymeric foam; wherein the process is characterized by the following: steps (i) and (ii) can occur simultaneously; steps (ii) and (iii) can occur in any order with respect to one another; at least one of the facing sheets has an exposed metal sheet; a foamable mixture containing a blowing agent composition having less than 50 wt percent chlorofluorocarbon and hydrochlorofluorocarbon blowing agents based on blowing agent weight and also containing sufficient halogen, phosphorous, and highly-halogenated compound to produce a foam meeting the requirement of Claim 1.

It is an object of the present invention to provide a polymeric foam and foam composite that contains a residual blowing agent composition that contains less than 50 wt percent CFC and HCFC blowing agents, preferably that contains mostly non-halogenated blowing agents, more preferably that is absent of halogenated blowing agents, and that passes the RCBT and meets FM 4880 approval requirements.

PFCs of the present invention have utility as acoustical and thermal insulation.

The present invention is a result of discovering that a PFC with a PUR or PIR foam having a residual blowing agent composition that contains less than 50 wt percent of CFC and HFC blowing agents, based on residual blowing agent weight, can pass both wall and ceiling portions of the RCBT and meet MF 4880 requirements. PFCs of the present invention have opposing major surfaces, which act as front and back faces. A major surface of an object is a surface having the largest dimensions. Opposing major surfaces of an object can have the same or different dimensions, provided that at least one of them has the largest dimensions of the object. When testing a PFC in the RCBT, expose the front face to the burning room and the back face to a wall or ceiling.

Facing sheets suitable for use in the present invention include any of the facing sheets known in PIR and PUR foam composite structures. The facing sheet on the front face of a PFC of the present invention, however, has an exposed metal sheet. An "exposed metal sheet" resides on a surface of the facing sheet and, when part of a PFC, remains visible on a surface of the PFC. Examples of suitable facing sheets include those facing sheets in United States patent (USP) 4,572,865 (column 15, line 60 through column 16, line 9), USP 5,789,458 (column 12, lines 20-35), and USP 6,030,559 (column 4, lines 50-65), metal sheets, and metal sheets in combination with any of the facing sheets in the above-cited patents. Particularly desirable are facing sheets that enhance thermal resistance through a PFC, increase flame retardancy of a PFC, or both. Examples of such facing sheets include metal sheets or metal sheets laminated to fire retardant papers, scrims or fiber mats. Most desirably, the facing sheet is a metal sheet, such as aluminum foil, due to its flame retardancy, reinforcing characteristics, availability and ease of implementation. One particularly desirable facing sheet is a laminate of metal sheet and a flame-retardant fiber component such as a non-expanding fiber mat or scrim.

PFCs of the present invention further comprise a PUR or PIR foam. Preparation of PUR and PIR foams requires forming a PUR or PIR foamable mixture and then foaming that mixture. PUR and PIR foamable mixtures comprise a mixture of an organic polyisocyanate, polyol, catalyst, blowing agent, and preferably a surfactant.

PUR and PIR foams differ in their Isocyanate Index. PUR foams typically have an Isocyanate Index of 100-200 while PIR foams have an Isocyanate Index greater than 200. Isocyanate Index is a ratio of the number of moles of isocyanate functionalities divided by the number of moles of isocyanate-reactive functionalities expressed as a percentage:

$$\text{Isocyanate Index} = 100 \ \text{x} \ \frac{\text{moles of Isocyanate Functionalities}}{\text{moles of Isocyanate - reactive Functionalities}}$$

"Isocyanate-reactive Functionalities" react with Isocyanate Functionalities and include for example, -OH functionalities.

Desirably, PFCs of the present invention comprise a PIR foam, preferably having an Isocyanate Index in a range of 200-600, more preferably 300-600, still more preferably 400-500, and even more preferably 450-500.

Organic isocyanates, polyols, and catalysts that are suitable for use in preparing PUR and PIR foams include any of those known in the art. For example, USP 5,789,458; USP 5,605,940; and USP 5,362,764 each describe organic isocyanates, polyols and catalysts that are suitable for preparing PUR or PIR foam for use in the present invention.

In general, suitable organic isocyanates include organic di- or polyisocyanates such as cycloaliphatic, araliphatic, aromatic and heterocyclic polyisocyanates and combinations thereof characterized in having two or more isocyanate groups per molecule. Organic isocyanates containing heteroatoms such as melamine-derived isocyanates, modified polyisocyanates such as carbodiimide or isocyanurate, and isocyanate-terminated quasi-prepolymers are all suitable organic isocyanates. Particularly desirably organic isocyanates are 2,4- and 2,6-toluene diisocyanate and mixtures thereof (TDI), 2,4'-, 2,2'-, and 4,4'-diphenylmethane diisocyanate (MDI), polymethylene polyphenylenepolyisocyanates (polymeric MDI), and mixtures thereof.

In general, suitable polyols include polyester polyols, polyether polyols, and mixtures thereof. Desirably, the polyol includes a polyester polyol, even more desirably an aromatic polyester polyol. Preferably, the polyol includes a polyol containing halogen, phosphorous, or both so as to enhance PIR and PUR foam flame retardancy. Examples of halogenated polyols include tetrabromophthalate diol. Examples of phosphorous containing polyols include phosphate polyol, phosphite polyols, phosphonate polyols, phosphinate polyols, phosphoramidates, polyphosphorous polyols, phosphinyl polyether polyols, and polyhydroxyl-containing phosphine oxides. One desirable polyol mixture contains 89 wt percent of a polyester polyol and 11 wt percent of a halogenated diol, such as tetrabromophthalate diol, wherein wt percent is relative to polyol mixture weight.

Any catalyst that will induce reaction of the isocyanate with the polyol are suitable for use in the present invention. Suitable catalysts include alkali salts and tertiary amines. Examples of suitable alkali salts include sodium salts, preferably potassium salts and ammonium salts, of organic carboxylic acids, expediently having from 1 to 8 carbon atoms, preferably 1 or 2 carbon atoms, for example the salts of formic acid, acetic acid, propionic acid, or octanoic acid, and tris (dialkylaminoethyl)-, tris(dimethylaminopropyl)-, tris(dimethylaminobutyl)- and the corresponding tris(diethylaminoalkyl)-s-hexahydrotriazines. Some of the most popular catalysts include (trimethylaminobutyl)ammonium formate, (trimethyle-2-hydroxypropyl)ammonium octonoate, potassium acetate, potassium formate and tris(dimethylaminopropyl)-s-hexahydrotriazine. Examples of suitable tertiary amines include 1,3,5-tris (N,N-dimethylaminopropyl)-s-hexahydrotriazine, o- and p-(dimethylaminomethyl) phenols and 2,4,6-tris(dimethylaminomethyl) phenol.

Generally, the foamable mixture comprises from 0.1 to 20 and preferably from 0.3 and 10 weight percent of catalyst based on foamable mixture weight.

Blowing agent compositions can contain a single blowing agent or a combination of blowing agents. Suitable blowing agents for use in preparing PFCs of present invention include any of those known in the art, provided less than 50 wt percent, based on total blowing agent weight, of the blowing agent composition consists of CFC and HCFC blowing agents.

Typical blowing agents include halogenated, partially halogenated and non-halogenated hydrocarbons, ethers, and esters; carbon dioxide; nitrogen; water; and readily volatile organic substances and/or compounds that decompose to liberate gases (for example, azo compounds). If water is present, it is preferably present at a concentration of one wt percent or less, more preferably 0.5 wt percent or less, based on foamable mixture weight. Hydrocarbon blowing agents include aliphatic or cycloaliphatic hydrocarbons containing four to seven carbon atoms ($C_4$-$C_7$ hydrocarbons). Examples of $C_4$-$C_7$ hydrocarbons include butane, iso-butane, n-pentane, iso-pentane, cyclopentane, hexane, cyclohexane, and heptane. Blowing agents desirably have a boiling point at a pressure of one atmosphere in a range of minus 50ºC to 100ºC, preferably minus 50ºC to 50ºC, and most preferably minus 50ºC to 38ºC.

Halogenated hydrocarbons include CFCs, HCFCs, fluorocarbons, hydrofluorocarbons (HFCs), chlorocarbons and hydrochlorocarbons. Examples of HCFCs include 1,1-dichloro-1-fluoroethane (HCFC 141b), 1,1-dichloro-2,2,2-trifluoroethane (HCFC-123), monochlorodifluoromethane (HCFC-22), 1-chloro-1,1-difluoroethane (HCFC-142b). Examples of HFCs include 1,1-difluoroethane (HFC-152a), 1,1,1,2-tetrafluoroethane (HFC-134a), 1,1,1,4,4-pentafluorobutane (HFC-356), 1,1,1,4,4-pentafluorobutane (HFC-365), 1,1,1,3,3-pentafluorobutane (HFC-365mfc), 1,1,2,2,3,3-hexafluoropropane (HFC-236ca), 1,1,1,2,3,3-hexafluoropropane (HFC-236ea), pentafluoroethane (HFC-125), 1,1,2,2,3-pentafluoropropane (HFC-245eb), and 1,1,1,3,3-pentafluoropropane (HFC-245fa). Examples of hydrochlorocarbons include 2-chloropropane.

Preferably, the blowing agent composition contains less than 50 wt percent of CFC and HCFC blowing agents, based on blowing agent composition weight. The blowing agent composition can contain less than 50 wt percent of any halogenated blowing agent, based on blowing agent composition weight. Suitable blowing agent compositions can contain greater than 50 wt percent, greater than 90 wt percent, even 100 wt percent, based on total blowing agent composition weight, of a blowing agent selected from non-halogenated blowing agents, 2-chloropropane, and combinations thereof. Desirably, the blowing agent composition is free of CFC and HCFC blowing agents. More desirably, the blowing agent composition is free of all halogenated blowing agents.

Foamable mixtures generally contain an amount of blowing agent composition sufficient to produce a PUR or PIR foam having a density between 0.5 and 10 pounds per cubic foot (pcf) (8 and 160 kilograms per cubic meter ($kg/m^3$)), preferably between 1 and 5 pcf (16 and 80 $kg/m^3$), and most preferably between 1.5 and 2.5 pcf (24 and 40 $kg/m^3$). The blowing agent composition generally comprises from 1 to 30 and preferably 5 to 20 weight percent of the foamable mixture.

PIR and PUR foams in the present invention comprise a residual blowing agent composition. "Residual blowing agent composition" refers to blowing agent composition that remains within a PIR or PUR foam within one month, preferably within one day, more preferably within one hour, of manufacture. The residual blowing agent composition contains less than 50 wt percent, preferably less than 25 wt percent, more preferably less than 10 wt percent, still more preferably less than 1 wt percent of CFC and HCFC blowing agents, based on total blowing agent composition weight. Desirably, the residual blowing agent composition is free from CFC and HCFC blowing agents. The residual blowing agent composition can also contain less than 50 wt percent, and can even be free of halogenated blowing agents, based on total blowing agent composition weight. Suitable residual blowing agent compositions can contain greater than 50 wt percent, greater than 90 wt percent, or contain 100 wt percent, based on total residual blowing agent composition weight, of a blowing agent selected from non-halogenated blowing agents, 2-chloropropane, and combinations thereof. Determine residual blowing agent composition by an analytical technique such as gas chromatography.

Surfactants can facilitate the foaming of PIR and PUR formulations and can increase thermal insulation properties of PIR and PUR foam. Suitable surfactants include those described in USP 5,705,823 (column 11, line 44 through column 17, line 30). Specific examples of suitable surfactants include silicon/ethyleneoxide/propylene oxide copolymers and polydimethylsiloxane-polyalkylene block copolymers such as those available from Union Carbide Corporation under the trade names "Y-10222", "Y-10764", "L-54200" and "L-5340, from Dow Coming Corporation under the trade names "DC-193" and "DC-5315", and from Goldschmidt Chemical Corporation under the trade names "B-8408" and "B-8407". Surfactants such as Y-10764 are examples of surfactants useful for increasing a foam's insulation value. Desirably, a surfactant comprises 0.05 to 10, and preferably from 0.1 to 6 wt percent of the foamable mixture.

Polymeric foams of the present invention contain halogens at a concentration of at least 4 wt percent, preferably at least 5 wt percent, based on foam weight. Generally, the halogen concentration is less than 10 wt percent, based on foam weight. At least ten percent of the halogen concentration comes from halogens on a highly-halogenated compound, preferably a highly halogenated alkane. A "highly-halogenated compound" contains at least 20 wt percent halogen, based on total highly-halogenated compound weight Suitable highly-halogenated compounds include 2-chloropropane, n-propylbromide; 1-bromo, 3-chloropropane; and n-butylbromide. 2-chloropropane is particularly desirable because it can act as a blowing agent.

Desirably, the halogen is selected from a group consisting of bromine and chlorine. One particularly desirable method of incorporating halogens into PIR and PUR foams is by using a halogenated polyol to prepare the PUR or PIR foam. Foams made with a halogenated polyol contain a "residual halogenated polyol". "Residual halogenated polyol" includes both reacted and, if present, non-reacted halogenated polyol within a PUR or PIR foam.

Polymeric foam of the present invention also contains phosphorous at a concentration of at least 0.25 wt percent and generally less than 1 wt percent, relative to foam weight.

Phosphorous and halogen can be present in a foam as part of a flame retardant additive. Examples of suitable flame retardant additives include tetrakis(2-chloroethyl) ethylene phosphonate, tris(1,3-dichloropropyl phosphate, tris (beta-chloroethyl) phosphate, tricresyl phosphate, tris(2,3-dibromopropyl)phosphate, tris(2-chloropropyl)phosphate, tris (2,3-dibromopropyl) phosphate, triethyl phosphate and brominated compounds alkanes such as n-propyl bromide.

Polymeric foams in PFCs of the present invention further contain flame-retarding fibers. Flame-retarding fibers include any fibrous material that does not burn, melt, or decompose within a PUR or PIR foam matrix when exposed to temperatures of up to 500°C, preferably up to 750°C, more preferably up to 800°C in an air atmosphere. Examples of suitable flame-retarding fibers include inorganic fibers such as various glass fibers, metal fibers, and ceramic fibers. Flame-retarding fibers can be of any length, though increasing fiber length generally improves foam properties (including mechanical strength).

In a fire, flame-retarding fibers serve to retain burned and charred portions of a PFC in place, thereby protecting unburned foam from exposure to flames where the unburned foam may act as fuel for the fire. To effectively serve such a purpose, flame-retarding fibers need to reside within a PIR or PUR foam near its front surface. A foam's front surface is a major surface of the foam that is adjacent to the front face of a PFC containing the foam. A foam also has a back surface opposing its front surface.

Foams in the PFCs of the present invention desirably have flame-retarding fibers within, preferably substantially uniformly distributed within 0.125 inches (3.2 mm) of the foam's front surface. Desirably, the foam has flame-retarding fibers distributed, preferably substantially uniformly distributed, within the foam from at least 0.5 inches (12.7 mm) from the front surface and extending within 0.125 inches (3.18 mm), preferably within 0.0625 inches (1.59 mm) of the polymeric foam's front surface. If the foam is less than 0.5 inches (12.7 mm) thick, fibers desirably extend from the back surface of the foam. Preferably, flame-retarding fibers extend all the way to the foam's front surface. Desirably, flame-retarding fibers are distributed within the foam to a distance of at least 0.75 inches (19.8 mm), and preferably at least 1 inch (25.4 mm) from the front surface or to the thickness of the foam, whichever is less. Flame-retarding fibers desirably extend all the way from a polymeric foam's back surface to its front surface. Substantially uniformly distributed means the distribution appears uniform to an unaided eye by viewing a cross section of the foam. Flame-retarding fibers that originate as an expandable fiber mat are desirably substantially uniformly distributed throughout the polymeric foam. However, flame-retarding fibers do not need to be distributed throughout the foam and may be solely within 0.125 inches (3.2 mm) of the foam's front surface.

The polymeric foam has an average concentration of flame-retarding fibers within 0.125 inches (3.2 mm), more preferably within 0.0625 inches (1.6 mm) of the polymeric foam's front surface of at least one wt percent, preferably at least two wt percent, more preferably at least three wt percent and generally 50 wt percent or less. The upper limit of fiber concentration in the top 0.125 inches (3.2 mm) or 0.0625 inches (1.6 mm) is typically limited by how much fiber may be present while still allowing sufficient bonding between the foam and metal facer component on the front face of a PFC. Increasing the fiber concentration at the front surface of a foam can reduce the bond strength to the exposed metal facer sheet. The concentration of fiber can exceed even 50 wt percent in the top 0.125 inches (3.2 mm) as long as sufficient bonding between the foam and metal facer is present so as to prevent the facer sheet from falling off from the foam during the RCBT. The fiber concentration can be 6 wt percent or less, or even 5 wt percent or less and the PFC can achieve FM4880 approval.

Measure fiber concentration as a wt percent based on the weight of foam and fiber in a specified portion of the foam. Determine an average concentration by slicing a specified thickness of foam that includes the front surface, weighing the thickness of foam, then isolating and weighing the glass fibers from the thickness of foam by, for example, burning the foam away from the fibers and then weighing them. Use the weight of the thickness of foam and the weight of glass fibers to determine weight percent of glass fibers in the thickness of foam.

Flame-retarding fibers within a polymeric foam originate as part of a flame-retarding fiber component. Flame-retarding fiber components include expandable fiber mat, non-expandable fiber scrim and mat, and combinations thereof.

Expandable fiber mats expand during foam fabrication, thereby distributing fibers within a foam. Expandable fiber mats generally contain a binder that holds them together during processing. Suitable expandable fiber mats include high binder and low binder fiber mats. High binder fiber mats have a binder level of at least six percent by weight of binder and fiber (that is, based on total mat weight) and require mechanical fracturing of the fibers or binder in the mat in order to render the mat expandable. Such mechanical fracturing typically involves corrugation (for example, crimping or crinkling) of the fiber mat. Low binder fiber mats (fiber mats containing less than six percent binder, based on total mat weight) are desirable because they are expandable without requiring corrugation. Corrugation can cause non-uniform fiber distribution and non-uniform foam surface texture.

One desirable way to incorporate flame-retarding fibers into a PFC proximate to the PFC's front face is by using a front facer comprising a metal sheet laminated to a fiber component. Examples of suitable flame-retarding fiber components laminated to metal sheet facers include: (1) a 2-7 gram/ft$^2$ (21-75 g/m$^2$) continuous stand fiberglass mat containing 6.5-10 wt percent binder based on total mat weight; (2) a 9.5-11 g/ft$^2$ (102-118 g/m$^2$) chopped fiber mat (for example, comprising 0.75 inch (10 mm) long fibers) containing 17-27 wt percent binder based on total mat weight; and (3) a fiberglass scrim with a pattern of 0.125-1.0 inch (3.2 -25 mm) square holes and having a basis weight of 1-7 g/ft$^2$ (21-75 g/m$^2$) and containing 4.5-6.0 wt percent binder based on total scrim weight. Mats and scrims bound to a front facer typically have a thickness of between 10-40 mil (.25-1 mm).

In general, prepare PFCs of the present invention by (i) conveying a bottom facing sheet and a top facing sheet such that the top facing sheet is above and substantially planar to the bottom facing sheet; (ii) disposing a flame-retarding fiber component between the facing sheets; (iii) disposing a foamable mixture between the top and bottom facing sheets; (iv) constricting the top and bottom facing sheets through a metering gap, achieving penetration of the foamable mixture into the flame-retarding fiber composition; and (v) expanding the foamable mixture into a polymeric foam. Steps (i) and (ii) can occur simultaneously. Steps (ii) and (iii) can occur in any order with respect to one another.

The process is further characterized by the following: at least one of the facing sheets has an exposed metal sheet and the foamable mixture contains a blowing agent containing less than 50 wt percent CFC and HCFC base on blowing agent composition weight and contains sufficient halogen, phosphorous, and highly-halogenated compounds to produce a foam having at least 4 wt percent of halogen and at least 0.25 wt percent of phosphorous based on foam weight. At least 10 wt percent of the halogen concentration (at least 0.4 wt percent based on foam weight) is from a highly-halogenated compound.

Generally, expand a foamable mixture at a temperature of zero degrees Celsius (°C) to 150°C. The foamable mixture contains sufficient halogen, phosphorous, and highly-halogenated compound to produce a foam having a halogen concentration of at least 4 wt percent based on foam weight wherein at least 10 percent of the halogens (0.4 wt percent based on foam weight) are from highly-halogenated compounds, a phosphorous concentration of at least 0.25 wt percent based on foam weight, and a residual blowing agent composition comprising less than 50 wt percent of CFC and HFC blowing agents based on total blowing agent composition weight. At least one of the facing sheets has an exposed metal sheet oriented such that the PFC has a front face containing an exposed metal sheet. The front face of the PFC can be either the side having the top facing sheet or the bottom facing sheet, provided the front face encompasses an exposed metal sheet and sufficient flame-retarding fibers proximate to the front face to meet the requirements set forth herein for a PFC. Generally, though not necessarily, the front face of the resulting PFC is the surface comprising the top facing sheet.

A copending United States Patent Application (number 60/411819) entitled "Use of a Low Binder Fiber Mat with a Support Mat for Fabricating a Fiber Reinforced Polymeric Foam Composite" describes an especially desirable general process for preparing PFCs using composite webs to incorporate fibers.

A composite web comprises a low binder fiber mat disposed onto a support mat prior to conveying either the low binder fiber mat or the support mat into a fiber reinforced foam fabrication process. Composite webs allow use of low binder expandable mats that otherwise would have insufficient integrity for implementing into production processes. Use of low binder fiber mats instead of corrugated expandable mats is desirable to achieve more uniform fiber distribution within a polymeric foam as well as a more uniform foam surface.

In a composite web, a major surface of a low binder fiber mat contacts a major surface of a support mat. Mats generally have opposing major surfaces. A composite web can contain one, or more than one, support mat. A single support mat can span at least a portion of a major surface, preferably an entire major surface of a low binder fiber mat. Alternatively, two or more support mats can span at least a portion of a major surface of a low binder fiber mat. The support mat(s) of a composite web serve to allow handling and conveying of a low binder fiber mat without stretching the low binder fiber mat sufficiently to observe necking or ridging. The support mat also hinders low binder fiber mat in rolls of composite web from contacting itself, thereby minimizing pulling apart of the low binder fiber mat upon unrolling. The support mat also can prevent fibers from the low binder fiber mat from contacting rollers during the fabrication process of fiber reinforced PFCs.

PFCs of the present invention are not limited to a particular polymeric foam thickness. However, when a foam in a PFC exceeds two inches (5.08 centimeter (cm)) in thickness, it is desirable to incorporate at least two expandable fiber mats, at least one of which is desirably part of a composite web. Additional expandable fiber mats provide more fiber for expansion into a thicker foam. For example, convey a composite web between a first expandable fiber mat and top facing sheet prior to step (iv), oriented so that the composite web's support mat is between the composite web's low binder expandable fiber mat and the first expandable fiber mat. It is acceptable to incorporate any number of composite webs into the present process. Generally, it is advantageous to orient the composite webs so that one composite web's support mat is adjacent to an adjacent composite web's expandable fiber mat. Convey all composite webs prior to step (iv). In step (iv) it is desirable to achieve penetration of the foamable mixture into the low binder mat of each composite webs. The expandable fiber mat of the additional composite web(s) can expand into the additional thickness of the foam.

Many variations are conceivable as to how to prepare a PFC of the present invention. For example, steps (i) and (ii) of the general process, above, can occur simultaneously by conveying a composite web whose support mat is the bottom facing sheet or by conveying a metal foil top or bottom sheet having a fire-retarding fiber mat adhered thereto.

It is also, for example, acceptable to prepare polymeric foam compositions of the present invention by a batch process. Batch processes include preparing composites one board at a time in contrast to producing a continuous line of polymer foam composition that is ultimately cut into boards. Continuous process are more efficient and cost effective, therefore more desirable.

The following examples serve to further illustrate the present invention and how to prepare PFCs within the scope of the present invention.

Example (Ex) 1

Convey top and bottom facing sheets of 0.9 mil (0.023 mm) thick aluminum foil between a nip of two metering rolls. Convey a first fiber mat through a corrugator onto the bottom facing sheet prior to the nip. The first fiber mat is a glass mat having 6.3 wt percent binder, based on total mat weight. The first fiber mat weighs 4 grams per square foot (g/ft$^2$), or 75.3 grams per square meter (g/m$^2$). Convey a composite web (JW40x54WX, from Hollinee Glass Fibers) having an expandable glass fiber mat disposed onto a glass fiber scrim between the first fiber mat and top facing sheet prior to the nip. The expandable glass fiber mat weighs 4 g/ft$^2$ (75.3 g/m$^2$). The glass fiber scrim is a mesh having woven glass fibers at a spacing of 3 fibers per inch in orthogonal direction. The glass fiber scrim weighs 2 g/ft$^2$ (21.5 g/m$^2$). Convey the composite web so that the expandable glass fiber is between the top facing sheet and first fiber mat and so that the expandable fiber mat of the composite web contacts the top facing sheet at the nip of the metering rolls.

Dispose onto the first fiber mat a foamable mixture just prior to the nip of the metering rolls. Form the foamable mixture by mixing together: 353 parts polymethylene polyphenylisocyanate (Mondur MR 200, Bayer Corporation); 100 parts aromatic polyester polyol (Terate 3512A, Kosa Corporation); 31 parts of a flame retardant mixture containing 40 wt percent tetrabromophthalate diol (PHT-4,diol from Great Lakes Chemical) and 60 wt percent tris (2-chloropropyl) phosphate, wt percent is relative to total weight of flame retardant mixture; 16 parts 1-bromopropane (Great Lakes Corporation); 30 parts of a non-halogenated hydrocarbon blowing agent (Exxsol 2000, Mobil); 6.0 parts surfactant (Pelsil 9736, Pelron Corporation); and 6.0 parts catalyst (Pelcat 9887B, Pelron Corporation). All parts are parts by weight of foamable mixture.

Compress the top and bottom facing sheets together at the nip of the metering rolls, forcing the foamable mixture through the composite web and first fiber mat to obtain a compressed composition. Convey the compressed composition through a curing oven at 200 to 250 degrees Fahrenheit (93 -121ºC). Allow the compressed composition to expand to a thickness of 2 inches (5 cm) and a density of 1.7 to 2.5 pounds per cubic foot (27.2 to 40.0 kilograms per cubic meter). The foamable mixture expands in the curing oven producing a fiber reinforced PFC. Expandable glass fiber has a substantially uniform distribution throughout the foam, from the top surface to the bottom surface.

Cut the resulting PFC into panels 48 inches (122 cm) wide by 96 inches (244 cm) long. Use six panels to test according to the UBC 26-3 RCBT, both wall and ceiling portions. The panels pass the wall and ceiling portions of the RCBT with results of no flames out the door, no charring at the extremities and no excessive smoke. Ex 1 meets requirements for FM 4880 approval.

Ex 2

Prepare Ex 2 in a manner similar to Ex 1 except use a 7.0 g/ft$^2$ (131.8 g/m$^2$) first fiber mat and use a 7.0 g/ft$^2$ (131.8 g/m$^2$) low binder mat in the composite web. Provide sufficient foamable mixture to form a four inch (ten cm) thick foam having a density in the range of Ex 1 and allow the foamable mixture to expand to a four-inch thick foam (ten cm).

Ex 2 also has expandable fiber substantially uniformly distributed throughout the foam, from the foam's top surface to its bottom surface. Ex 2 also passes both ceiling and wall portions of the UBC-26-3 RCBT and meets requirements for FM 4880 approval.

Examples 1 and 2 illustrate PFCs of the present invention at thicknesses of 2 and 4 inches (5 and 10 cm) that contain a halogen-free residual blowing agent composition.

Ex 3

Convey top and bottom facing sheets between a nip of two metering rolls. The top facing sheet comprises a 15 mil thick non-expanding non-woven glass-fiber mat having a 71.5 g/m$^2$ basis weight (for example, MANNIGLAS® 1200; MANNIGLAS is a trademark of Lydall, Inc.) adhered to a 0.7 mil (0.0178 m) thick aluminum foil sheet. The bottom facing sheet is 0.9 mil (0.023 mm) thick aluminum foil. Position the top sheet so that the glass-fiber mat is between the aluminum foil sheets.

Convey a first fiber mat through a corrugator onto the bottom facing sheet prior to the nip. The first fiber mat is a glass mat having 6.3 wt percent binder, based on total mat weight. The first fiber mat weighs 7 grams per square foot (g/ft$^2$), or 131 grams per square meter (g/m$^2$).

Dispose onto the first fiber mat a foamable mixture (same foamable mixtures as in Ex 1) just prior to the nip of the metering rolls.

Compress the top and bottom facing sheets together at the nip of the metering rolls, forcing the foamable mixture through the first fiber mat and 15 mil thick non-expanding non-woven glass-fiber mat. Convey the compressed composition through a curing oven at 200 to 250 degrees Fahrenheit (93 -121ºC). Allow the compressed composition to expand to a thickness of 2 inches (5 cm) and a density of 1.7 to 2.5 pounds per cubic foot (27.2 to 40.0 kilograms per cubic meter). The foamable mixture expands in the curing oven producing a PFC. The first fiber mat expands with the foamable mixture and extends to within 0.5 inches (1.27 cm) of the top facing sheet. The fiber mat attached to the facing sheet does not expand appreciably.

Cut the resulting PFC into panels 48 inches (122 cm) wide by 96 inches (244 cm) long. Use six panels to test according to the UBC 26-3 RCBT, both wall and ceiling portions. The panels pass the wall and ceiling portions of the RCBT with no flames out the door, no charring at the extremities and no excessive smoke. Ex 3 meets requirements for FM 4880 approval.

Ex 3 illustrates a PFC that achieves FM4880 approval primarily due to fire resistant properties of a non-expanding glass fiber mat that resides within 0.125 inches (3.2 mm) of the top facing sheet and relatively little expanded glass film distributed throughout the rest of the foam. A similar PFC without any expanded glass is expected to also perform sufficiently to achieve FM4880 approval.

**Claims**

1. A polymeric foam composite comprising a polymeric foam selected from polyurethane and polyisocyanurate foam that has opposing front and back surfaces, said foam comprising:

    a) halogens at a concentration of at least 4 weight-percent (wt percent) based on foam weight, wherein at least 10 wt percent of the halogen concentration is from a highly-halogenated compound;
    b) phosphorous at a concentration of at least 0.25 weight-percent based on foam weight;
    c) a residual blowing agent composition containing less than 50 percent, based on residual blowing agent composition weight, of chlorofluorocarbon and hydrochlorofluorocarbon blowing agent(s);
    d) flame-retarding fibers at an average concentration of at least one weight-percent, based on combined foam and fiber weight, within 0.125 inches (3.2 millimeters) of the foam's front surface;
    e) a facing sheet adhered to at least the front surface, said facing sheet having an exposed metal sheet; and

    wherein said polymeric foam composite passes both the wall and ceiling portions of the United Building Code 26-3 Room Corner Burn Test and meets qualifications for Factory Mutual 4880 approval.

2. The polymeric foam composite of Claim 1, wherein flame-retarding fibers are distributed within the foam from 0.5 inches (12.7 millimeters) or the thickness of the foam, whichever is less, and extending to within 0.125 inches (3.2 millimeters) of the foam's front surface.

3. The polymeric foam composite of Claim 1, wherein said foam further comprises residual halogenated polyol.

4. The polymeric foam composite of Claim 3, wherein said halogenated polyol is a brominated polyol.

5. The polymeric foam composite of Claim 3, wherein said halogenated polyol is tetrabromophthalate diol.

6. The polymeric foam composite of Claim 1, wherein said foam further comprises a halogenated phosphate.

7. The polymeric foam composite of Claim 6, wherein said phosphate is tris(2-chloropropyl) phosphate.

8. The polymeric foam composite of Claim 1, wherein said residual blowing agent composition consists of blowing agents selected from a group consisting of carbon dioxide, water, non-halogenated hydrocarbons, and 2-chloropropane.

9. The polymeric foam composite of Claim 1, wherein said residual blowing agent composition is free of halogenated blowing agents.

10. The polymeric foam composite of Claim 1, wherein said flame-retarding fibers are glass fibers.

11. The polymeric foam composite of Claim 1, wherein said flame-retarding fibers extend to the front surface of the polymeric foam.

12. The polymeric foam composite of Claim 1, wherein said flame-retarding fibers include fibers from an expandable fiber mat that are substantially uniformly distributed throughout the polymeric foam.

13. The polymeric foam composite of Claim 1, wherein the foam has a thickness of greater than 2 inches (5 centimeters).

14. A process for preparing the polymeric foam composite of Claim 1 comprising the steps:

(i) conveying a bottom facing sheet and a top facing sheet such that the top facing sheet is above and substantially planar to the bottom facing sheet;
(ii) disposing a flame-retarding fiber component between the facing sheets;
(iii) disposing a foamable mixture selected from polyurethane resin and polyisocyanurate resin foamable mixtures between the top and bottom facing sheets;
(iv) constricting the top and bottom facing sheets through a metering gap, achieving penetration of the foamable mixture into the fiber component;
(v) expanding the foamable mixture into a polymeric foam;

wherein the process is **characterized by** the following: steps (i) and (ii) can occur simultaneously; steps (ii) and (iii) can occur in any order with respect to one another; at least one of the facing sheets has an exposed metal sheet; and the foamable mixture contains a blowing agent composition having less than 50 wt percent chlorofluorocarbon and hydrochlorofluorocarbon blowing agents based on blowing agent weight and also contains sufficient halogen, phosphorous, and highly-halogenated compound to produce a foam meeting the requirement of Claim 1.

15. The process of Claim 14, wherein the top facing sheet comprises a metal foil adhered to a glass mat and the top facing sheet is oriented so that the glass mat is between the metal foil and the bottom facing sheet.

16. The process of Claim 14, wherein the fiber component comprises a first expandable fiber mat and step (ii) further comprises conveying the first expandable fiber mat onto the bottom facing sheet.

17. The process of Claim 14, wherein the fibrous component comprises a first expandable fiber mat that is part of a composite web that contains the first expandable fiber mat disposed on the bottom facing sheet.

18. The process of Claim 17, wherein the first expandable fiber mat is a low binder expandable fiber mat.

19. The process of Claim 16, further comprising conveying a composite web containing a low binder fiber mat disposed on a support web between the facing sheets and onto the first expandable fiber mat prior to step (iv) such that the support web is between the low binder mat and the first expandable fiber mat and wherein foamable mixture penetrates the composite web in step (iv).

**Patentansprüche**

1. Ein Polymerschaumverbund, enthaltend einen Polymerschaum, ausgewählt aus Polyurethan- und Polyisocyanuratschaum, der sich gegenüberliegende vordere und rückwärtige Oberflächen hat, wobei dieser Schaum enthält:

a) Halogene in einer Konzentration von wenigstens 4 Gewichtsprozent (Gew.-%), bezogen auf das Schaumgewicht, wobei wenigstens 10 Gew.-% der Halogenkonzentration aus einer hochhalogenierten Verbindung stammen;
b) Phosphor in einer Konzentration von wenigstens 0,25 Gew.-%, bezogen auf das Schaumgewicht;
c) einen Rest einer Treibmittelzusammensetzung, die weniger als 50%, bezogen auf das Gewicht des Restes der Treibmittelzusammensetzung, Chlorfluorkohlenstoff- und Chlorfluorkohlenwasserstofftreibmittel enthält;

d) brandverzögernde Fasern in einer mittleren Konzentration von wenigstens 1 Gew.-%, bezogen auf das kombinierte Gewicht des Schaumes und der Faser, innerhalb von 0,125 in. (3,2 mm) von der vorderen Oberfläche des Schaumes;

e) eine Deckschicht, die wenigstens an der vorderen Oberfläche anhaftet, wobei diese Deckschicht eine freiliegende Metallfolie aufweist; und

wobei dieser Polymerschaumverbund sowohl den Wand- wie auch den Deckenteil des United Building Code 26-3 Room Corner Burn Test besteht und die Qualifikationen für die Factory Mutual 4880 Genehmigung erfüllt.

2. Der Polymerschaumverbund nach Anspruch 1, wobei die brandverzögernden Fasern in dem Schaum innerhalb von 0,5 in. (12,7 mm), oder über die Dicke des Schaumes, welches jeweils weniger ist, verteilt sind und bis auf innerhalb von 0,125 in. (3,2 mm) von der vorderen Oberfläche des Schaumes reichen.

3. Der Polymerschaumverbund nach Anspruch 1, wobei der Schaum außerdem einen Rest halogeniertes Polyol enthält.

4. Der Polymerschaumverbund nach Anspruch 3, wobei das halogenierte Polyol ein bromiertes Polyol ist.

5. Der Polymerschaumverbund nach Anspruch 3, wobei das halogenierte Polyol Tetrabromphthalatdiol ist.

6. Der Polymerschaumverbund nach Anspruch 1, wobei der Schaum außerdem ein halogeniertes Phosphat enthält.

7. Der Polymerschaumverbund nach Anspruch 6, wobei das Phosphat Tris(2-chlorpropyl)phosphat ist.

8. Der Polymerschaumverbund nach Anspruch 1, wobei der Rest der Treibmittelzusammensetzung aus Treibmitteln besteht, die ausgewählt sind aus einer Gruppe bestehend aus Kohlendioxid, Wasser, nichthalogenierten Kohlenwasserstoffen und 2-Chlorpropan.

9. Der Polymerschaumverbund nach Anspruch 1, wobei der Rest der Treibmittelzusammensetzung frei von halogenierten Treibmitteln ist.

10. Der Polymerschaumverbund nach Anspruch 1, wobei die brandverzögernden Fasern Glasfasern sind.

11. Der Polymerschaumverbund nach Anspruch 1, wobei die brandverzögernden Fasern sich bis zur vorderen Oberfläche des Polymerschaumes erstrecken.

12. Der Polymerschaumverbund nach Anspruch 1, wobei die brandverzögernden Fasern Fasern aus einer expandierbaren Fasermatte umfassen, die im Wesentlichen einheitlich in dem gesamten Polymerschaum verteilt sind.

13. Der Polymerschaumverbund nach Anspruch 1, wobei der Schaum eine Dicke von mehr als 2 in. (5 cm) hat.

14. Ein Verfahren zur Herstellung des Polymerschaumverbunds nach Anspruch 1, umfassend die Schritte:

(i) Fördern einer unteren Deckschicht und einer oberen Deckschicht, so dass die obere Deckschicht oberhalb und im Wesentlichen planar zu der unteren Deckschicht ist;
(ii) Verteilen einer brandverzögernden Faserkomponente zwischen den Deckschichten;
(iii) Verteilen einer aufschäumbaren Mischung, ausgewählt aus aufschäumbaren Polyurethanharz und Polyisocyanuratharz-Mischungen zwischen der oberen und unteren Deckschicht;
(iv) Zusammendrücken der oberen und unteren Deckschicht durch einen maßgebenden Spalt, wodurch das Eindringen der aufschäumbaren Mischung in die Faserkomponente erreicht wird;
(v) Expandieren der aufschäumbaren Mischung zu einem Polymerschaum;

wobei das Verfahren **gekennzeichnet ist durch** das Folgende: die Schritte (i) und (ii) können gleichzeitig erfolgen; die Schritte (ii) und (iii) können in jeder Reihenfolge in bezug aufeinander erfolgen; wenigstens eine der Deckschichten weist eine freiliegende Metallfolie auf; und die aufschäumbare Mischung enthält eine Treibmittelzusammensetzung, die weniger als 50 Gew.-% Chlorfluorkohlenstoff- und Chlorfluorkohlenwasserstofftreibmittel, bezogen auf das Gewicht des Treibmittels, enthält und auch ausreichend Halogen, Phosphor und hochhalogenierte Verbindungen enthält, um einen Schaum zu erzeugen, der die Anforderung gemäß Anspruch 1 erfüllt.

**EP 1 546 243 B1**

**15.** Das Verfahren nach Anspruch 14, wobei die obere Deckschicht eine Metallfolie, die an einer Glasmatte anhaftet, umfasst und die obere Deckschicht so orientiert ist, dass sich die Glasmatte zwischen der Metallfolie und der unteren Deckschicht befindet.

**16.** Das Verfahren nach Anspruch 14, wobei die Faserkomponente eine erste expandierbare Fasermatte enthält und Schritt (ii) außerdem das Befördern der ersten expandierbaren Fasermatte auf die untere Deckschicht umfasst.

**17.** Das Verfahren nach Anspruch 14, wobei die faserige Komponente eine erste expandierbare Fasermatte umfasst, die Teil einer Verbundbahn ist, die die erste expandierbare Fasermatte, angeordnet auf der unteren Deckschicht, enthält.

**18.** Das Verfahren nach Anspruch 17, wobei die erste expandierbare Fasermatte eine expandierbare Fasermatte mit niedrigem Bindemittelgehalt ist.

**19.** Das Verfahren nach Anspruch 16, außerdem umfassend das Befördern einer Verbundbahn, die eine Fasermatte mit niedrigem Bindemittelgehalt enthält und auf einer Trägerbahn angeordnet ist, zwischen die Deckschichten und auf die erste expandierbare Fasermatte vor Schritt (iv), so dass sich die Trägerbahn zwischen der Matte mit niedrigem Bindemittelgehalt und der ersten expandierbaren Fasermatte befindet und wobei die aufschäumbare Mischung in Schritt (iv) in die Verbundbahn eindringt.

**Revendications**

**1.** Composite de mousse polymère comprenant une mousse polymère choisie parmi une mousse de polyuréthane et de polyisocyanurate qui possède des surfaces avant et arrière opposées, ladite mousse comprenant :

a) des halogènes à une concentration d'au moins 4 pour cent en poids (% en poids) sur la base du poids de la mousse, où au moins 10 pour cent en poids de la concentration en halogène provient d'un composé hautement halogéné ;
b) du phosphore à une concentration d'au moins 0,25 pour cent en poids sur la base du poids de la mousse ;
c) une composition résiduelle d'agents d'expansion contenant moins de 50 pour cent, sur la base du poids de la composition résiduelle d'agents d'expansion, d'agent (s) d'expansion chlorofluorocarboné(s) et hydrochlorofluorocarboné(s) ;
d) des fibres ignifugées à une concentration moyenne d'au moins un pour cent en poids, sur la base du poids combiné de la mousse et des fibres, à moins de 3,2 millimètres (0,125 pouce) de la surface avant de la mousse ;
e) une feuille de revêtement adhérée au moins sur la surface avant, ladite feuille de revêtement ayant une feuille de métal exposée ; et

dans lequel ledit composite de mousse polymère a réussi les parties concernant les murs et les plafonds du RCBT 96-3 de l'UBC (United Building Code 26-3 Room Corner Burn Test) et remplit les conditions pour l'agrément de la Factory Mutual 4880.

**2.** Composite de mousse polymère selon la revendication 1, dans laquelle les fibres ignifugées sont distribuées dans la mousse sur au moins 12,7 millimètres (0,5 pouce) ou sur l'épaisseur de la mousse, dans le cas où celle-ci est plus fine, et s'étendent à moins de 3,2 millimètres (0,125 pouce) de la surface avant de la mousse.

**3.** Composite de mousse polymère selon la revendication 1, dans lequel ladite mousse comprend en outre un polyol halogéné résiduel.

**4.** Composite de mousse polymère selon la revendication 3, dans lequel ledit polyol halogéné est un polyol bromé.

**5.** Composite de mousse polymère selon la revendication 3, dans lequel ledit polyol halogéné est le tétrabromophtalate-diol.

**6.** Composite de mousse polymère selon la revendication 1, dans lequel ladite mousse comprend en outre un phosphate halogéné.

**7.** Composite de mousse polymère selon la revendication 6, dans lequel ledit phosphate est le tris (2-chloropropyl)phosphate.

**8.** Composite de mousse polymère selon la revendication 1, dans lequel ladite composition résiduelle d'agents d'expansion est constituée d'agents d'expansion choisis dans un groupe constitué par le dioxyde de carbone, l'eau, des hydrocarbures non-halogénés, et le 2-chloropropane.

**9.** Composite de mousse polymère selon la revendication 1, dans lequel ladite composition résiduelle d'agents d'expansion est dépourvue d'agent d'expansion halogéné.

**10.** Composite de mousse polymère selon la revendication 1, dans lequel lesdites fibres ignifugées sont des fibres de verre.

**11.** Composite de mousse polymère selon la revendication 1, dans lequel lesdites fibres ignifugées s'étendent jusqu'à la surface avant de la mousse polymère.

**12.** Composite de mousse polymère selon la revendication 1, dans lequel lesdites fibres ignifugées comprennent des fibres issues d'un mat de fibres extensibles qui sont sensiblement uniformément distribuées dans la totalité de la mousse polymère.

**13.** Composite de mousse polymère selon la revendication 1, dans lequel la mousse a une épaisseur supérieure à 5 centimètres (2 pouces).

**14.** Procédé destiné à la préparation du composite de mousse polymère selon la revendication 1 comprenant les étapes consistant à :

(i) déposer une feuille de revêtement inférieure et une feuille de revêtement supérieure de telle sorte que la feuille de revêtement supérieure soit sensiblement planaire et au-dessus de la feuille de revêtement inférieure ;
(ii) disposer un composant de fibres ignifugées entre les feuilles de revêtement ;
(iii) disposer un mélange moussant choisi parmi des mélanges moussants de résine de polyuréthane et de résine de polyisocyanurate entre les feuilles de revêtement supérieure et inférieure ;
(iv) resserrer les feuilles de revêtement supérieure et inférieure avec un espace régulateur, pour permettre la pénétration du mélange moussant dans le composant de fibres ;
(v) faire mousser le mélange moussant en une mousse polymère ;

lequel procédé est **caractérisé par** ce qui suit : les étapes (i) et (ii) peuvent s'effectuer simultanément ; les étapes (ii) et (iii) peuvent s'effectuer dans n'importe quel ordre, l'une après l'autre ; au moins une des feuilles de revêtement a une feuille de métal exposée ; et le mélange moussant contient une composition d'agents d'expansion ayant moins de 50 pour cent en poids d'agents d'expansion chlorofluorocarbonés et hydrochloro-fluorocarbonés sur la base du poids de l'agent d'expansion et contient également suffisamment d'halogène, de phosphore, et de composé hautement halogéné pour produire une mousse répondant à la condition requise de la revendication 1.

**15.** Procédé selon la revendication 14, dans lequel la feuille de revêtement supérieure comprend une feuille de métal adhérée sur un mat de verre et la feuille de revêtement supérieure est orientée de sorte que le mat de verre soit entre la feuille de métal et la feuille de revêtement inférieure.

**16.** Procédé selon la revendication 14, dans lequel le composant de fibres comprend un premier mat de fibres extensibles et l'étape (ii) consiste en outre à déposer le premier mat de fibres extensibles sur la feuille de revêtement inférieure.

**17.** Procédé selon la revendication 14, dans lequel le composant fibreux comprend un premier mat de fibres extensibles faisant partie d'une toile de composite qui contient le premier mat de fibres extensibles disposé sur la feuille de revêtement inférieure.

**18.** Procédé selon la revendication 17, dans lequel le premier mat de fibres extensibles est un mat de fibres extensibles à faible teneur en liant.

**19.** Procédé selon la revendication 16, consistant en outre à déposer une toile de composite contenant un mat de fibres à faible teneur en liant disposé sur une toile de support entre les feuilles de revêtement et sur le premier mat de fibres extensibles avant l'étape (iv) de sorte que la toile de support soit entre le mat à faible teneur en liant et le premier mat de fibres extensibles et dans lequel le mélange moussant pénètre dans la toile de composite au cours de l'étape (iv).